# EUROPEAN PATENT SPECIFICATION

(11) **EP 2 159 269 B1**
(45) Date of publication and mention of the grant of the patent: **28.11.2018**
(21) Application number: 07788689.3
(22) Date of filing: 08.06.2007
(51) Int. Cl.: C09D 11/00, B41M 1/34, C04B 41/00, C09D 11/322, C09D 11/36

(54) **METHOD FOR PRODUCTION OF A DIGITAL PRINTING INK AND INK OBTAINED**
VERFAHREN ZUR HERSTELLUNG EINER DIGITALDRUCKTINTE UND ERHALTENE TINTE
PROCÉDÉ DE FABRICATION D'UNE ENCRE D'IMPRESSION NUMÉRIQUE ET ENCRE AINSI OBTENUE

(43) Date of publication of application: 03.03.2010
(73) Proprietor: Kao Corporation, Chuo-ku Tokyo 103-8210 (JP)
(72) Inventor: GARCÍA GÁLVEZ, Óscar, Luís, E-08191 Rubi (ES); LÓPEZ MUÑOZ, Antonio, E-08191 Rubi (ES); MIRAVETE BERENGUÉ, José, E-08191 Rubi (ES)
(74) Representative: Hoffmann Eitle
(86) International application number: PCT/ES2007/070113
(87) International publication number: WO 2008/148901

(56) References cited:
- EP-A- 1 491 331
- WO-A-01/51573
- WO-A-98/51749
- WO-A-2005/052071
- JP-A- 2001 081 363
- JP-A- 2007 084 623
- US-A- 5 837 046
- US-A- 6 110 266
- US-A1- 2003 089 275

## Description

The present invention relates to a procedure for the production of a digital printing ink, which comprises the following phases:
a first phase in which at least one dispersant, one pigment and one vehicle is premixed with a high-shear stirring system,
a second pregrinding phase, wherein the first phase product is passed through a ball mill with a diameter of between 0.7 and 1.2 microns to produce a particle size of less than 3 microns,
a third grinding phase to produce a particle size of less than 1 micron, controlling the applied energy to prevent charging the particles with energy,
a fourth filtration phase employing a 1-micron filter, and
a fifth phase in which the ink resulting from the fourth phase is packaged, wherein the pigment is in a proportion of between 15% and 40% and the vehicle is in a proportion of between 48% and 80% and the dispersant is in a proportion of between 5% and 15% of the total component weight of the premixed components.

### BACKGROUND OF THE INVENTION

The piezoelectric concept comprises the controlled excitation by means of the variables known as pulse, voltage and frequency corresponding to the electrical signal established between the machine and/or print module and the either shared wall or independent ceramic transducers that form the head.

In this way, the ink is pumped through the injection orifice in the form of a drop, the size of which depends on the vibration frequency and voltage, together with the injection plate orifice.

Patent US6402823 is known, dating from the year 2000, in the name of FERRO CORPORATION, which refers to the formulation of inks for decoration by an Ink Jet (digital) printer, in which the inks are composed of complex transition metal compounds that accept electrons (salt) and soluble in the vehicle or medium formed by heteroatoms, nitrogen, oxygen, phosphorous or sulphur, acting as electron donors. The metals in the salt are Al, Bi, Ni, Ti, Wo, Va, Mo, Co and Au.

According to the description, the vehicle is composed by an apolar medium that is immiscible in water, for example, benzene, toluene, Xylene and aromatic distillate or petroleum. Independently of the above, the previously defined inks are excessively absorbed by the substrate (clay) prior to firing, which causes changes in colour that depend on the time between this and printing, with this being the limitation of said invention.

Patent US6696100, from 2000, also in the name of FERRO CORPORATION, considers temperature as a physical variable that is capable of reducing the viscosity of the ink or cited invention in order to increase the fluidity of the vehicle to a viscosity of less than 40 cps. Said invention is free from solvents and the colouring material is formed during the firing of the clay, producing a metal oxide from the metal salt forming the ink. The cited metal salts are compounds of gold, iridium, cadmium, calcium, iron, lead, manganese, chromium, molybdenum, platinum, silver, tungsten, vanadium, yttrium and zirconium.

Just as in the previous patent, the vehicle is a carboxylated chain, with at least six carbons, in other words, hexanoates, heptanoate, octanoate, nonanoate, decanoate, 2-etilhexanoate, laureates, etc., having the main problem of decolouration and absorption of colour in function of the time prior to firing leading to colours with a certain tendency to being toned down, together with a lack of definition.

Patent US5714236, from 1995, in the name of BRITISH CERAMIC RESEARCH LIMITED claims a mixture of a metal salt with a fuel with a pH of 5 for the purpose of donating oxygen and therefore a complex metal salt, with said mixture being injectable under conditions suitable for Ink Jet printing.

The employed metal salt is a metal acetate used in nanoparticle size.

Finally, patent US5273575 should be emphasised, from 1992, in the name of the French company IMAJE, S.A., which claims the presence of a metal salt in percentages from 0 to 40 in solvent mass. Said solvent shall have low volatility in 40%, with the difference up to 100% having greater volatility. Examples of such components are glycols, glycol ethers, glycerol or one of its derivatives.

The previously described inventions intrinsically consist of an oxide reduction reaction in which there are electron donors and acceptors of the metal salts present as ink colorant material that lack stability after printing due to their structure and differ with respect to the quality sought after by the market, with the greatest drawback being the difference in colours and definition in function of the printing and firing deficiencies.

Moreover, it is relevant to mention patent JP2003049096 which refers to a method of obtaining a transparent ink-jet ink having good discharge stability from a nozzle. The ink-jet includes colored particles having 10-100 nm average particle size obtained by physically bonding pigments on the surface of silica particles by a mechanochemical method, a solvent having high boiling temperature and a dispersant. The ink has 1.5-35 mPa of viscosity at 25 ºC.

WO 2005/052071 describes a digital printing ink composition, which comprises at least a glass frit or metal particles having a particle size less than 2 µm and a dispersion medium, preferably comprising also an inorganic pigment, and is suitable for deposition onto substrates. The printed ink coating can be fired to yield a permanent coating.

EP 1 491 331 describes a process making a flexographic printing plate, the process including a step of forming an image mask on a flexographic printing starting plate by discharging an oil-based ink by an ink-jet method, the flexographic printing starting plate having a support and a photosensitive resin layer provided thereon; a step of subjecting the photosensitive resin layer to overall exposure via the image mask; and a step of developing the photosensitive resin layer.

WO 98/51749 relates to ink compositions, particularly jet ink compositions that have low sedimentation rates comprising a carrier, a resin, and a pigment which is a nanostructured material. The pigment has a dry particle size of about 100 nm or less. Also disclosed is an improved process of jet printing on substrates, the improvement comprising projecting a stream of droplets of the jet ink composition to the surface of the substrate and controlling the direction of the stream so that the droplets are caused to form the desired printed message on the surface.

US 2003/089275 (A1) concerns an ink for a display panel that at a time of application is a mixture of a powder material, a water-soluble resin included in a range of 1 wt % to 20 wt % inclusive of the ink, and a water-miscible solvent. The ink is water-soluble, and in comparison to conventional organic inks, the ink of the present invention exhibits a markedly reduced susceptibility to the occurrence of electrostatic action.

US 6,110,266 relates to pigment preparations containing (a) at least one pigment having an average primary particle size of 0.1 to 50 nm selected from the group consisting of carbides, nitrides, borides, and silicides of the elements Ti, Zr, Hf, Si, Ge, and Sn, (b) at least one dispersant having a weight average molecular weight (Mw) greater than 1000, and (c) water. The invention further relates to the use of such pigment preparations in inks for ink-jet printing.

JP 2007-084623 concerns an ink for a inkjet printer, capable of forming a pattern with a high density and high quality, by preventing clogging of a nozzle from occurring. The ink is obtained by together mixing an inorganic pigment, a dispersant, and a solvent and stirring them, wherein a median diameter of the inorganic pigment is in a range of 0.8-1.7 µm and a ratio the inorganic pigment having a particle diameter of not more than 0.5 µm is less than 30 wt.%.

JP 2001-081363 describes a color ink for ink-jet printer free from clogging, and capable of drawing high-density high-quality pattern and picture. This ink contains at least the following six elements: an inorganic pigment which develops color by baking; a glass frit as a fusing agent; water and a water-soluble medium as solvent; an alcohol for promoting drying; a dispersant for suppressing the precipitation of the inorganic pigment and the glass frit; and a defoaming agent for suppressing the generation of bubbles. The particle sizes of the mixture of the inorganic pigment and the glass frit are set in the range of 0.3-2 µm.

US 5,837,046 concerns an inkjet printer ink of the kind comprising a dispersion of a pigment in a non-aqueous diluent wherein the diluent is a single phase liquid comprising a major amount of aliphatic hydrocarbon and a minor amount of a polar component, comprising oleyl alcohol alone or in combination with a least one other polar liquid such as an ether or an ester.

### DISCLOSURE OF THE INVENTION

Two main techniques are currently employed to print onto tiles: silkscreening and photogravure (rotocolor). These require the tile to be as flat as possible, with minimum roughness.

Serious problems exist when it become necessary to print onto non-regular surfaces because, on the one hand, it limits the use of pigments with high weights at the time of firing (due to its different firing point) and, on the other, ink jet or digital printing inks have low viscosity, for which reason it is assumed that the inks will go to the bottom and the surface is not correctly printed.

The advantage of using inkjet is that it can print whatever is desired, together with imitating stone without the substrate actually being stone, and with the advantage that stone has considerable thickness (weight and handling drawbacks) and is porous (making it difficult to remove graffiti).

The present invention refers to a procedure for producing a digital printing ink as defined in claim 1. The ink is formulated based on a vehicle, an organic dispersant an inorganic ink and an optional additive, apart from which, using a piezoelectric head as ink injection means, this is deposited on a porous inorganic substrate (clay) for subsequent calcination (firing) in an oxygen-rich atmosphere.

The firing, to which the clay and ink combination are subsequently subjected, takes place at a temperature of between 700 and 1,200ºC, at which the ink(s) vehicle is calcined and eliminated as an active integral part of the consequent colour donor reaction that occurs between the clay enamel and the pigment of this invention.

Its major advance is the possibility to use or employ pigments that are traditional ceramic sector, being able to assign a grinding energy value per kilogram of pigment to each crystalline structure, with said grinding energy being assigned in kW/kg.

The invention product is therefore an ink based on the compact mixture of vehicle, dispersant, and pigment as the result of a grinding process administrated independently for each considered crystalline structure (pigment) and with stable printing performance after being subjected to a firing process. The pigment can be ground down with the other two or added in a later phase if it is already in a particle size of less than one micron having been produced, for example, by the sol-gel process. Said firing process generates the actual colouration of the crystalline structure corresponding to each ink, consequently producing a matt or brilliant effect depending on the flux previously applied to the clay. Hence, the firing temperatures must not be less than 500ºC and also recommended not to exceed 1,300ºC.

The ink obtained by the process of this invention is controlled by the physical parameters that are typical of "drop on demand" (DOD) digital or inkjet printing.

The present invention therefore provides a procedure for the production of a digital printing ink, which comprises the following phases:
a first phase in which at least one dispersant, one pigment and one vehicle is premixed with a high-shear stirring system,
a second pregrinding phase, wherein the first phase product is passed through a ball mill with a diameter of between 0.7 and 1.2 microns to produce a particle size of less than 3 microns,
a third grinding phase to produce a particle size of less than 1 micron, with control of the applied energy to prevent charging the particles, a fourth filtration phase in which a 1-micron filter is applied and a fifth phase in which the ink resulting from the fourth phase is packaged.
The pigment is in a proportion of between 15% and 40% and the vehicle is in a proportion of between 48% and 80% and the dispersant is in a proportion of between 5% and 15% of the total component weight of the premixed components.

### SPECIFIC EMBODIMENT EXAMPLE OF THIS INVENTION

Thus, the procedure for the production of a digital printing ink and covered by this invention comprises mainly of the following phases:
a first phase in which at least one pigment, one dispersant and one vehicle is premixed with a high-shear stirring system.

The pigment is in a proportion of between 15 and 40% of the total component weight of the vehicle in a proportion of between 48 and 80% of the total component of the premix and the dispersant is in a proportion of between 5 and 15% of the total component weight of the premix.

A dearomatised aliphatic hydrocarbon or isoparrafins or a combination of both or also a synthesised ester of isopropyl alcohol has been found suitable for the vehicle. Similarly, the vehicle flash point lies between 40 and 140ºC.

Said premix should be maintained at a temperature of between 20 and 25ºC, in order to maintain a viscosity of between 5 and 35 mPa*s (centipoises).

In the assumption that the premix is at a higher temperature, one between 25 and 50ºC, the viscosity parameter should be change to between 10 and 20 mPa*s (centipoises).

In a second grinding phase, the first phase product is passed through a zirconium oxide ball mill (although this material will depend on the actual case at the time), with a diameter of between 0.7 and 1.2 microns. This would mean obtaining a particle size of less than 3 microns.

In a third phase, the aim of the grinding phase is to produce a particle size of less than 1 micron, with control of the applied energy so that grinding is achieved without charging the particles with energy and enabling the pigment to remain is suspension.

The purpose of all this is to obtain two goals, on the one hand produce a pigment in suspension without any need for decanting operations and, on the other, prevent the particles from forming clumps.

Moreover, in this phase it is necessary for the particle size not to be too small, because the specific surface area must not be increased, which would also increase pigment reactivity at the time of oxidation (when firing takes place), otherwise there would be a visual loss of colour.

Filtration takes place in the fourth phase of the product of the product obtained after grinding and a one-micron filter is applied to separate and discard particles greater than 1 micron.

Finally, in a fifth phase, the ink resulting from the fourth phase is packaged.

The density or specific gravity of the resulting ink shall be 1 g/cm³ and never exceed 1.20 g/cm³.

The employed pigment may be directly introduced into the procedure, in other words, under the assumption that the pigment is available in a particle size of less than 1 micron (for example, those previously produced by a sol-gel process, understanding such a process as the transition of a colloidal liquid into a solid phase). Said solid phase will be a metal oxide subjected to hydrolysis so that it forms a colloidal suspension that finally condenses into its solid state considered ad being the pigment since grinding is not necessary and with the ink considered as being a dispersion of solid pigment in the vehicle.

When the ink is going to be used, it is held in a print head, either inkjet or DOD (Drop On demand) type. The obtained ink is injectable and stable under correct conditions using standard print modules and heads. In this embodiment, heads have been used that have an injector diameter of less than 60 microns, but never less than 20 microns because the idea is to obtain a drop of less than 100 pl, but never less than 12 pl.

For this embodiment and print heads, the pigment particle size shall be less than one micron, preferably less than 500 nm, but more recommendable between 500 and 750 nm.

Once the ink has been injected onto the surface to be printed, said ink shall be subjected to firing at temperatures between 500ºC and 1,300ºC, depending on the pigment and its reaction to oxidation.

There is the possibility of adding an additive during premixing. In this embodiment, there is a nominal percentage of less than 1% of the total premix components. The additive is employed to regulate pigment surface tension. This can be achieved using products already on the market, such as BYK 333, BYK 340, BYK 330, SURFINOL 440, DOW 57, DOW 11 and marketed by BYK CHEMIE, AIR PRODUCTS and DOW CHEMICAL.

As examples of dispersants of mixtures of the same existing on the market produced and distributed by LUBRIZOL, there are, for example, Solsperse 13940, Solsperse 36000, Solsperse 32500, Solsperse 28000, Solsperse 19000, Solsperse 16000, Solsperse 39000 or their respective assigned co-dispersants , for example, Solsperse 22000 and 5000.

Isoparrafins or their mixtures are employed as vehicles, which are commercially available as the now cited ISOPAR E, ISOPAR V, ISOPAR G, ISOPAR L, ISOPAR H as produced by EXXON MOBIL, together with contra-types to the same produced by BRITISH PETROLEUM and TOTAL and also esters synthesised from isopropyl alcohol.

As previously explained, the final purpose of the solvent mixture is to guarantee a vehicle with a flash point equal to or less than 140ºC, but never less than 40ºC and preferable between 100ºC and 140ºC in accordance with the ASTM D56 procedure.

Dearomatised aliphatic hydrocarbons or their mixtures, the flash points of which are equal to or less than 140ºC, can also be used as the vehicle, for example: EXXSOL D140, EXXSOL D130, EXXSOL D110, EXXSOL D80 Y EXXSOL D40 produced by EXXON MOBIL and the contra-types from TOTAL within their HYDROSEAL and SPIRDANE ranges.

As synthesised isopropyl alcohol esters, laurates or palmitates can be employed or even combinations of both.

With respect to the pigments, there is the possibility of using one or a combination of several. These shall be zirconates and/or silicates of Cr, Sn, Ni, Pr, Fe, Co and their oxides, which are produced industrially in commercial grades.

Thus, the inkjet printing ink resulting from the previous procedure comprises at least one pigment, one dispersant and one vehicle.

The pigment is in a proportion of between 15% and 40% of the total weight, the vehicle in a proportion of between 48% and 80% of the total weight and the dispersant in a proportion of between 5% and 15% of the total weight.

The vehicle is a aliphatic hydrocarbon or an isoparrafin or a combination of both or even a combination of them with esters synthesised from isopropyl alcohol.

Said ink may optionally contain an additive. This additive is in a proportion of less than 1% of the total.

The surface tension of the ink is between 25 and 35 Dynes/cm² and its density or specific gravity is equal to or less than 1.20 g/cm³.

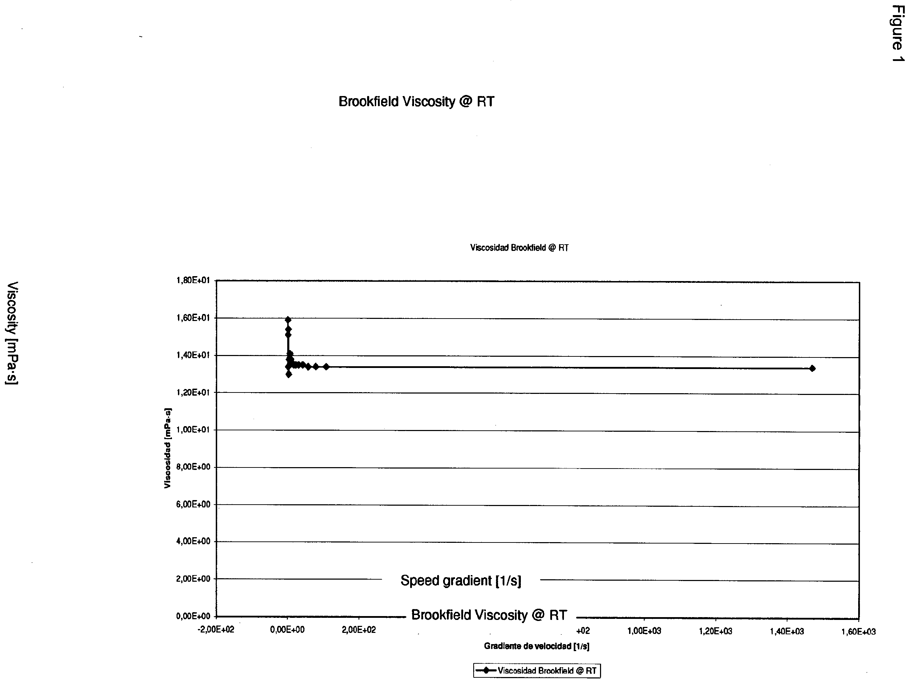

The resulting ink is stable, non-thixotropic, in other words, it does not lose its viscosity even when stored for a long time and has a Newtonian character resulting from the described process in function of time as shown on the included graph (see Figure 1).
so that the surface tension of the invention, independently of its colorant crystalline structure (pigment) lies between 25 and 35 [Dynes/cm²].

In this way, the viscosity is unique, stable and controlled, with the test temperature the only variable with any effect.

A series of examples is provided below, four without additive and four with. The additive is employed to modify the surface tension in function of the employed print head.

### EXAMPLE 1:

In this example, an ink is obtained with a low percentage of pigment, a high percentage of vehicle and a low percentage of dispersant:

| Component | Percentage % |
|---|---|
| ISOPAR V | 50 |
| EXXOL D140 | 10 |
| EXXOL D40 | 19 |
| SOLSPERSE 16000 | 6 |
| Pigment | 15 |
| Total | 100 |

### EXAMPLE 2:

In this example, an ink is obtained with a medium-low percentage of pigment, a high percentage of vehicle, maintaining the isoparrafins, but significantly lowering the dearomatised aliphatic hydrocarbons, together with a medium-low percentage of dispersant:

| Component | Percentage % |
|---|---|
| ISOPAR G | 30 |
| ISOPAR L | 20 |
| EXXOL D140 | 10 |
| EXXOL D40 | 13 |
| SOLSPERSE 16000 | 7 |
| Pigment | 20 |
| Total | 100 |

### EXAMPLE 3

In this example, an ink is obtained in which the pigment is increased in relation to the other two previous examples, the isoparrafins are drastically reduced and the dearomatised aliphatic hydrocarbons are significantly increased and the dispersant is also increased:

| Component | Percentage % |
|---|---|
| ISOPAR V | 10 |
| EXXOL D140 | 50 |
| EXXOL D40 | 7 |
| SOLSPERSE 16000 | 8 |
| Pigment | 25 |
| Total | 100 |

### EXAMPLE 4

In the last of the examples without additives, the pigment is increased with respect to example 3, the dispersant does not vary and the percentages of the two vehicle components is balanced, in other words, the isoparrafins and dearomatised aliphatic hydrocarbons.

| Component | Percentage % |
|---|---|
| ISOPAR V | 30 |
| EXXOL D140 | 32 |
| SOLSPERSE 19000 | 8 |
| Pigment | 30 |
| Total | 100 |

As previously indicated, the following four examples are going to employ an additive or additive combination, polymethylsiloxane or fluorated polyesters. The referred additives have been added to the previous examples:

### EXAMPLE 1 WITH ADDITIVE

| Component | Percentage % |
|---|---|
| ISOPAR V | 49,90 |
| EXXOL D140 | 10 |
| EXXOL D40 | 19 |
| SOLSPERSE 16000 | 6 |
| Pigment | 15 |
| BYK 333 | 0,05 |
| BYK 340 | 0,05 |
| Total | 100 |

### EXAMPLE 2 WITH ADDITIVE

| Component | Percentage % |
|---|---|
| ISOPAR G | 29,90 |
| ISOPAR L | 20 |
| EXXOL D140 | 10 |
| EXXOL D40 | 13 |
| SOLSPERSE 16000 | 7 |
| Pigment | 20 |
| BYK 333 | 0,10 |
| Total | 100 |

### EXAMPLE 3 WITH ADDITIVE

| Component | Percentage % |
|---|---|
| ISOPAR V | 9,70 |
| EXXOL D140 | 50 |
| EXXOL D40 | 7 |
| SOLSPERSE 16000 | 8 |
| Pigment | 25 |
| BYK 333 | 0,20 |
| BYK 340 | 0,10 |
| Total | 100 |

### EXAMPLE 4 WITH ADDITIVE

| Component | Percentage % |
|---|---|
| ISOPAR V | 29,70 |
| EXXOL D140 | 32 |
| SOLSPERSE 19000 | 8 |
| Pigment | 30 |
| BYK 333 | 0,30 |
| Total | 100 |

Finally, example 5 is proposed with an additive and isopropyl alcohol esters.

| Component | Percentage % |
|---|---|
| ISOPAR | 10 |
| ISOPROPYL LAURATE | 56,90 |
| SOLSPERSE 19000 | 12 |
| Pigment | 21 |
| BYK 333 | 0,10 |
| Total | 100 |

## Claims

1. A procedure for the production of a digital printing ink **characterised in that** it comprises the following phases:
- a first phase in which at least one dispersant, one pigment and one vehicle is premixed with a high-shear stirring system,
- a second pregrinding phase, wherein the first phase product is passed through a ball mill with a diameter of between 0.7 and 1.2 microns to produce a particle size of less than 3 microns,
- a third grinding phase to produce a particle size of less than 1 micron, controlling the applied energy to prevent charging the particles with energy,
- a fourth filtration phase employing a 1-micron filter, and
- a fifth phase in which the ink resulting from the fourth phase is packaged
wherein the pigment is in a proportion of between 15% and 40% and the vehicle is in a proportion of between 48% and 80% and the dispersant is in a proportion of between 5% and 15% of the total component weight of the premixed components.

2. A procedure in accordance with claim 1 **characterised in that** once the ink has been injected onto the surface to be printed, said ink is subjected to firing at temperatures between 500ºC and 1,300ºC.

3. A procedure in accordance with claim 1 **characterised in that** the vehicle is a dearomatised aliphatic hydrocarbon or an isoparrafin or a combination of both or even a combination of them with esters synthesised from isopropyl alcohol.

4. A procedure in accordance with claim 3 **characterised in that** the flash point of the vehicle is between 40 and 140ºC.

5. A procedure in accordance with claim 3 **characterised in that** the esters synthesised from isopropyl alcohol are laurates and/or palmitates.

6. A procedure in accordance with at least one of the previous claims **characterised in that** the premixed components contains an additive.

7. A procedure in accordance with claim 6 **characterised in that** the additive is in a proportion of less than 1% of the total premixed components.

8. A procedure in accordance with claim 1 **characterised in that** the premixed components should be maintained at a temperature of between 20 and 25ºC, in order to maintain a viscosity of between 5 and 35 mPa*s (centipoise).

9. A procedure in accordance with claim 1 **characterised in that** the premixed components maintained at a temperature of between 25 and 50ºC in order to maintain a viscosity of between 10 and 20 mPa*s (centipoise).

## Patentansprüche

1. Verfahren zur Erzeugung einer digitalen Drucktinte, **dadurch gekennzeichnet, dass** es die folgenden Phasen enthält:
- eine erste Phase, worin zumindest ein Dispergiermittel, ein Pigment und ein Träger mit einem Hochscher-Rührsystem vorgemischt werden,
- eine zweite Vormahlphase, worin das Produkt der ersten Phase durch eine Kugelmühle mit einem Durchmesser zwischen 0,7 und 1,2 Mikron geleitet wird, zur Erzeugung einer Teilchengröße von weniger als 3 Mikron,
- eine dritte Mahlphase, zur Erzeugung einer Teilchengröße von weniger als 1 Mikron, wobei die auferlegte Energie gesteuert wird, zum Verhindern der Beladung der Teilchen mit Energie,
- eine vierte Filtrationsphase, bei der ein 1-Mikron-Filter verwendet wird, und
- eine fünfte Phase, bei der die Tinte, die von der vierten Phase resultiert, verpackt wird,
worin das Pigment in einem Anteil zwischen 15 und 40 % und der Vehikel in einem Anteil zwischen 48 und 80 % und das Dispergiermittel in einem Anteil zwischen 5 und 15 % des Gewichts der gesamten Komponenten der vorgemischten Komponenten vorhanden sind.

2. Verfahren gemäß Anspruch 1, **dadurch gekennzeichnet, dass** nach Injektion der Tinte auf die zu druckende Oberfläche mit der Tinte ein Feuern bei Temperaturen zwischen 500 und 1.300°C durchgeführt wird.

3. Verfahren gemäß Anspruch 1, **dadurch gekennzeichnet, dass** der Träger ein dearomatisierter aliphatischer Kohlenwasserstoff oder ein Isoparrafin oder eine Kombination von beiden oder eine Kombination von diesen mit Estern ist, synthetisiert von Isopropylalkohol.

4. Verfahren gemäß Anspruch 3, **dadurch gekennzeichnet, dass** der Flash-Punkt des Trägers zwischen 40 und 140°C ist.

5. Verfahren gemäß Anspruch 3, **dadurch gekennzeichnet, dass** die Ester, die von Isopropylalkohol synthetisiert sind, Laurate und/oder Palmitate sind.

6. Verfahren gemäß zumindest einem der vorhergehenden Ansprüche, **dadurch gekennzeichnet, dass** die vorgemischten Komponenten ein Additiv enthalten.

7. Verfahren gemäß Anspruch 6, **dadurch gekennzeichnet, dass** das Additiv in einem Anteil von weniger als 1 % der gesamten vorgemischten Komponenten vorliegt.

8. Verfahren gemäß Anspruch 1, **dadurch gekennzeichnet, dass** die vorgemischten Komponenten bei einer Temperatur zwischen 20 und 25°C aufrechterhalten erhalten werden sollten, um eine Viskosität zwischen 5 und 25 mPa·s (Centipoise) aufrechtzuerhalten.

9. Verfahren gemäß Anspruch 1, **dadurch gekennzeichnet, dass** die vorgemischten Komponenten, die bei einer Temperatur zwischen 25 und 50°C aufrechterhalten werden, um eine Viskosität zwischen 10 und 20 mPa·s (Centipoise) aufrechtzuerhalten.

## Revendications

1. Procédure pour la production d'une encre d'impression numérique **caractérisée en ce qu'**elle comprend les phases suivantes :
- une première phase dans laquelle au moins un dispersant, un pigment et un excipient sont prémélangés avec un système d'agitation à cisaillement élevé,
- une deuxième phase de prébroyage, dans laquelle le produit issu de la première phase est passé à travers un broyeur à boules avant un diamètre entre 0,7 et 1,2 micron pour produire une taille de particule inférieure à 3 microns,
- une troisième phase de broyage pour produire une taille de particule inférieure à 1 micron, en maîtrisant l'énergie appliquée pour empêcher la charge des particules avec de l'énergie,
- une quatrième phase de filtration utilisant un filtre micronique, et
- une cinquième phase dans laquelle l'encre résultant de la quatrième phase est empaquetée
dans laquelle le pigment est dans une proportion entre 15 % et 40 % et l'excipient est dans une proportion entre 48 % et 80 % et le dispersant est dans une proportion entre 5 % et 15 % du poids total de composant des composants prémélangés.

2. Procédure selon la revendication 1, **caractérisée en ce qu'**une fois que l'encre a été injectée sur la surface à imprimer, ladite encre est soumise à une cuisson à des températures entre 500 °C et 1 300 °C.

3. Procédure selon la revendication 1, **caractérisée en ce que** l'excipient est un hydrocarbure aliphatique désaromatisé ou une isoparaffine ou une combinaison des deux ou même une combinaison de ceux-ci avec des esters synthétisés provenant d'alcool isopropylique.

4. Procédure selon la revendication 3, **caractérisée en ce que** le point d'ignition de l'excipient est entre 40 et 140 °C.

5. Procédure selon la revendication 3, **caractérisée en ce que** les esters synthétisés provenant d'alcool isopropylique sont des laurates et/ou des palmitates.

6. Procédure selon au moins une des revendications précédentes, **caractérisée en ce que** les composants prémélangés contiennent un additif.

7. Procédure selon la revendication 6, **caractérisée en ce que** l'additif est dans une proportion de moins de 1 % des composants prémélangés totaux.

8. Procédure selon la revendication 1, **caractérisée en ce que** les composants prémélangés devraient être maintenus à une température entre 20 et 25 °C, afin de maintenir une viscosité entre 5 et 35 mPa*s (centipoise).

9. Procédure selon la revendication 1, **caractérisée en ce que** les composants prémélangés sont maintenus à une température entre 25 et 50 °C afin de maintenir une viscosité entre 10 et 20 mPa*s (centipoise).
